(19) Europäisches Patentamt

European Patent Office

Office européen des brevets

(11) **EP 1 440 231 B1**

(12) **EUROPÄISCHE PATENTSCHRIFT**

(45) Veröffentlichungstag und Bekanntmachung des Hinweises auf die Patenterteilung:
**04.01.2006 Patentblatt 2006/01**

(21) Anmeldenummer: **02706642.2**

(22) Anmeldetag: **29.01.2002**

(51) Int Cl.:
*F02D 33/02* *(2006.01)*    *F02B 37/04* *(2006.01)*
*F02B 39/10* *(2006.01)*    *F02B 37/12* *(2006.01)*

(86) Internationale Anmeldenummer:
**PCT/DE2002/000306**

(87) Internationale Veröffentlichungsnummer:
**WO 2002/095204 (28.11.2002 Gazette 2002/48)**

(54) **VERFAHREN UND VORRICHTUNG ZUR STEUERUNG EINES ELEKTRISCH BETRIEBENEN LADERS**

METHOD AND DEVICE FOR CONTROLLING AN ELECTRICALLY DRIVEN CHARGER

PROCEDE ET DISPOSITIF POUR COMMANDER UN COMPRESSEUR ACTIONNE ELECTRIQUEMENT

(84) Benannte Vertragsstaaten:
**DE FR GB IT**

(30) Priorität: **19.05.2001 DE 10124543**

(43) Veröffentlichungstag der Anmeldung:
**28.07.2004 Patentblatt 2004/31**

(73) Patentinhaber: **ROBERT BOSCH GMBH**
**70442 Stuttgart (DE)**

(72) Erfinder:
• **BOLZ, Martin-Peter**
**77815 Buehl (DE)**
• **BAEUERLE, Michael**
**71706 Markgroeningen (DE)**

(56) Entgegenhaltungen:
EP-A- 0 420 704        DE-A- 3 411 496
DE-A- 19 905 112      DE-A- 19 924 274
DE-C- 19 757 661      US-B1- 6 205 787

## Beschreibung

Stand der Technik

Die Erfindung betrifft ein Verfahren und eine Vorrichtung zur Steuerung eines elektrisch betriebenen Laders (EL).

Es ist bekannt, die Leistung einer Brennkraftmaschine durch Verdichtung der zur Verbrennung des Kraftstoffs benötigten Luft mittels eines Abgasturboladers zu erhöhen, welcher aus einer Turbine und einem in der Luftzuführung zur Brennkraftmaschine betriebenen Verdichter besteht. Abgasturbolader weisen, insbesondere bei Kraftfahrzeugantrieben, den Nachteil eines verzögerten und unzureichenden Ansprechverhaltens bei kleinen Drehzahlen der Brennkraftmaschine auf. Zur Verbesserung des Ansprechverhaltens des Abgasturboladers ist es bekannt, den Abgasturbolader mittels eines elektrischen Hilfsantriebs zu unterstützen. Das kann beispielsweise durch einen in den Abgasturbolader integrierten Elektromotor erreicht werden, der bei kleinen Drehzahlen der Brennkraftmaschine die Welle des Abgasturboladers unterstützend antreibt. Dies bedingt jedoch sowohl eine hohe Drehzahlbelastbarkeit des Elektromotors, als auch einen hohen elektrischen Leistungsbedarf aufgrund der hohen Massenträgheitsmomente der Turbine des Abgasturboladers.

Zur Vermeidung dieser Nachteile ist beispielsweise aus dem US-Patent 6 029 452 bekannt, einen elektrisch betriebenen Ladeluftverdichter, welcher auch als elektrisch betriebener Hilfslader (EL) bezeichnet wird, in der Luftzuführung der Brennkraftmaschine in Reihe zu einem konventionellen Abgasturbolader zu betreiben. Dies hat den Vorteil, dass der separat in der Luftzuführung eingesetze elektrisch betriebene Hilfslader (EL) auf den untersten Drehzahlbereich der Brennkraftmaschine optimiert werden kann und aufgrund des deutlich geringeren Massenträgheitsmoments und der besseren Wirkungsgrade der Leistungsbedarf desselben deutlich kleiner ausfällt.

Es hat sich jedoch gezeigt, dass ein reines Ein- und Ausschalten eines solchen elektrischen Turboladers bzw. elektrischen Hilfsladers (EL) zu Unstetigkeiten im Ladedruckangebot mit einer entsprechenden Unstetigkeit im Drehmoment der Brennkraftmaschine führt. Ferner ist eine weitere negative Folge des Ein- und Ausschaltbetriebs eines solchen elektrischen Laders (EL) eine hohe Bordnetzbelastung des Fahrzeugs.

Aus der DE-A 197 40 968 ist bekannt, abhängig vom Fahrerwunsch einen Sollwert für die Luftmassenströmung im Saugrohr zu ermitteln. Aus der EP 885 353 B1 ist bekannt, auf der Basis der aus dem Fahrerwunsch abgeleiteten Sollfüllung einen Solldrosselklappenwinkel und einen Sollladedruckwert zu ermitteln.

Aus der Druckschrift DE 199 05112 A1 ist ein Verfahren zum Betreiben einer Brennkraftmaschine mit Vorverdichtung der Verbrennungsluft bekannt. Dabei wird die in einem Abgasturbolader verdichtete Luft in einer nachgeschalteten Verdichtungsstufe nachverdichtet. Dabei kann die nachgeschaltete Verdichtungsstufe als mechanischer Lader von der Kurbelwelle des Motors oder durch einen elektrischen oder hydraulischen Antrieb angetrieben sein. In beiden Fällen erfolgt die Ansteuerung der nachgeschalteten Verdichtungsstufe dadurch, dass ein Istdruck nach dem Abgasturbolader mit einem Solldruck verglichen wird und die nachgeschaltete Verdichtungsstufe zugeschaltet wird, wenn der Solldruck vom Istdruck unterschritten wird. In einer alternativen Ausführungsform offenbart diese Druckschrift einen regelbaren Antrieb für den Nachverdichter, mit dem eine stufenlose Anpassung der Gesamtförderleistung von Abgasturbolader und Nachverdichter bewirkt wird.

Vorteile der Erfindung

Die bedarfsabhängige Steuerung bzw. Regelung des elektrischen Laders bzw. des elektrischen Hilfsladers (EL) gemäß den Hanptansprüchen hat zum Vorteil, dass Unstetigkeiten im Ladedruckangebot und somit Unstetigkeiten im Drehmoment des Verbrennungsmotors vermieden werden. Dadurch verbessert sich der Fahrkomfort erheblich. Dieser Vorteil wird durch eine kontinuierliche Ansteuerung des Laders (z.B. durch kontinuierlich veränderbare Sollwerte) verstärkt.

Ein weiterer Vorteil der bedarfsabhängigen Steuerung bzw. Regelung ist, dass die Bordnetzbelastung des Fahrzeugs verringert wird.

In besonders vorteilhafter Weise ist die bedarfsabhängige Steuerung bzw. Regelung in bestehenden Motorsteuerungen ohne wesentliche funktionale Änderung der Ladedruckregelung einbaubar.

Besonders vorteilhaft ist die Bestimmung des Bedarfs an einem Eingriff des elektrischen Laders (EL) abhängig von Betriebsgrößen des Fahrzeugs und/oder des Motors wie der Umgebungsdruck oder wie der vom Fahrer angeforderte Ladedrucksollwert, wodurch eine genaue, exakte bedarfsabhängige Steuerung bzw. Regelung erfolgt.

In besonders vorteilhafter Weise werden durch die bedarfsabhängige Steuerung bzw. Regelung des Laders unnötige oder überhöhte Eingriffe des Laders vermieden.

Weitere Vorteile ergeben sich aus der nachfolgenden Beschreibung von Ausführungsbeispielen bzw. aus den abhängigen Patentansprüchen.

Zeichnung

Die Erfindung wird nachstehend anhand der in der Zeichnung dargestellten Ausführungsformen näher erläutert. Figur 1 zeigt dabei ein Übersichtsblockschaltbild mit Ablaufdiagramm, welches ein erstes Ausführungsbeispiel beschreibt, während in Figur 2 und Figur 3 anhand eines Ablaufdiagramms ein zweites und ein drittes Ausführungsbeispiel dargestellt ist.

Beschreibung von Ausführungsbeispielen

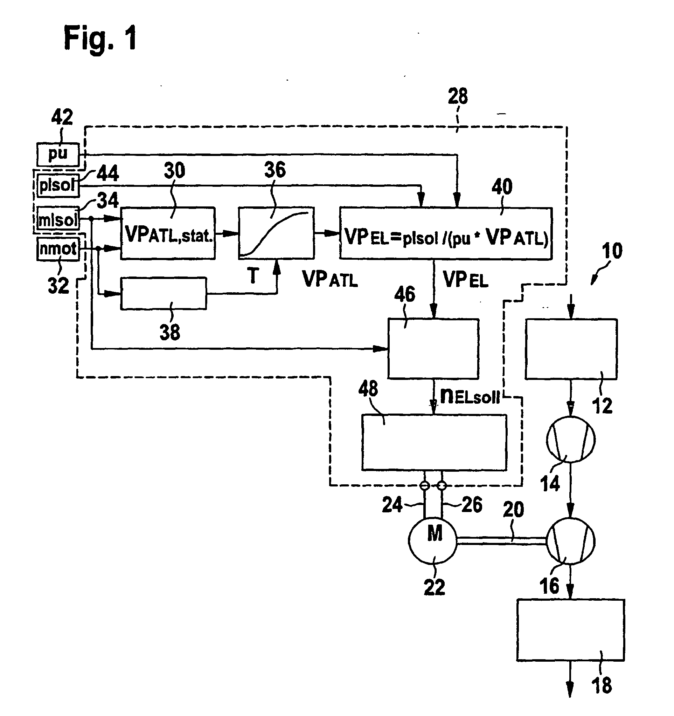

Figur 1 zeigt ein schematisches Blockschaltbild samt Ablaufdiagramm zur bedarfsgerechten Steuerung bzw. Regelung eines elektrischen Hilfsladers (EL). In Figur 1 ist schematisch das Luftansaugsystem 10 einer Brennkraftmaschine dargestellt. Die angesaugte Luft wird unter anderem über einen Luftfilter 12, den Verdichter eines Abgasturboladers 14, den elektrischen Hilfslader 16 zum Ladeluftkühler 18 und von dort über die Drosselklappe zur Brennkraftmaschine geführt. Der elektrische Hilfslader (EL) wird über eine Antriebswelle 20 von einem elektrischen Motor 22, beispielsweise einem Gleichstrommotor, betätigt. Dieser wird über Ansteuerleitungen 24 und 26 von einer elektronischen Steuereinheit 28 betätigt.

Die elektronische Steuereinheit 28 umfasst wenigstens einen Mikrocomputer, in dem Programme implementiert sind, welche die Steuerung der Brennkraftmaschine sowie die des elektrischen Hilfsladers (EL) durchführen. Ein bevorzugtes Ausführungsbeispiel für ein Programm zur Steuerung des elektrischen Hilfsladers (EL) ist als Ablaufdiagramm in Figur 1 als Teil der Steuereinheit 28 skizziert. Die dabei verwendeten Blöcke stellen Programme, Programmteile oder Programmschritte eines solchen Programms dar, während die Verbindungspfeile den Informationsfluss repräsentieren.

In bekannter Weise, daher in Figur 1 nicht dargestellt, wird abhängig von Last, Drehzahl und einer Vielzahl von weiteren Parametern, wie Temperatur, Höhe, Klopfzustand, etc. ein Ladedrucksollwert (plsoll) und ein Luftmassensollwert (mlsoll) ermittelt. Konkrete Lösungen zur Bestimmung dieser Werte sind aus dem eingangs genannten Stand der Technik bekannt. Der Ladedrucksollwert dient dabei zur Ladedruckregelung in Verbindung mit einem Ladedruckistwert zur Ansteuerung des Abgasturboladers im geschlossenen Regelkreis. Der Ladedruckistwert wird dabei vorzugsweise gemessen (Drucksensor in Strömungsrichtung vor der Drosselklappe), kann aber auch modelliert werden. Der Luftmassensollwert wird unter anderem zur Einstellung der Drosselklappe weiterverarbeitet (z.B. Bildung des Sollfüllungswerts).

Der dabei verwendete Ladedruckistwert repräsentiert also den Druck vor der Drosselklappe, d. h. er enthält sowohl die Wirkung des Verdichters des Abgasturboladers als auch die des elektrischen Hilfsladers (EL). Zur bedarfsgerechten Ansteuerung des elektrischen Hilfsladers (EL) ist jedoch eine Information über den Beitrag des Abgasturboladers zur Verdichtung allein notwendig, z.B. aktuelles Druckverhältnis über dem Verdichter des Abgasturboladers, welches in Abhängigkeit des Umgebungsdrucks oder des Drucks am Eintritt eines der beiden Lader in Strömungsrichtung und/oder der Abgastemperatur bestimmt wird. Daher wird wie nachfolgend beschrieben das vom elektrischen Hilfslader (EL) einzustellende Druckverhältnis bestimmt. Abhängig von diesem Solldruckverhältnis wird dann die Drehzahl des elektrischen Hilfsladers (EL) berechnet, die beispielsweise über eine elektronische Drehzahlregelung des Hilfsladers (EL) oder mittels Steuerung eingestellt wird. Dadurch wird eine präzise, bedarfsabhängige Betätigung des elektrischen Hilfsladers ohne unnötige Bordnetzbelastung, ohne die Gefahr eines unnötigen oder überhöhten Eingriffs des Hilfsladers und ohne Mehraufwand hinsichtlich der verwendeten Sensorik gewährleistet. Anstelle einer Drehzahlregelung oder der Steuerung des elektrischen Motors wird in einem anderen vorteilhaften Ausführungsbeispiel bei Verwendung eines weiteren Drucksensors vor dem elektrischen Hilfslader das Verdichterdruckverhältnis des elektrischen Hilfsladers selbst geregelt, wobei das einzustellende Druckverhältnis der Sollwert, das aus dem weiteren Drucksensor und dem Ladedrucksensor ermittelte Druckverhältnis der Istwert eines Regelkreises ist.

Das in Figur 1 als Teil der Steuereinheit 28 skizzierte Ablaufprogramm zeigt ein erstes Ausführungsbeispiel einer Vorgehensweise zur Bestimmung des einzustellenden Druckverhältnisses. Dazu wird in einem ersten Kennfeld 30 in Abhängigkeit der Motordrehzahl nmot, die von einer entsprechenden Messeinrichtung 32 erfasst wird, und des Sollluftmassenstroms, der beispielsweise nach Maßgabe der eingangs genannten Lösung in 34 abhängig vom Fahrerwunsch und weiteren Betriebsgrößen bestimmt wird, das stationär maximal verfügbare Verdichterdruckverhältnis des Abgasturboladers in diesem Betriebszustand ermittelt. Das Kennfeld wird dabei für jeden Motortyp beispielsweise auf einen Prüfstand appliziert. Das Verdichterdruckverhältnis VPATLstat des Abgasturboladers wird dann einem Filter 36 zugeführt, vorzugsweise einem Tiefpassfilter mindestens zweiter Ordnung, welcher das zeitliche Verhalten des Abgasturboladers nachbildet und somit aus dem stationären maximalen Verdichterdruckverhältnis des Abgasturboladers das aktuell maximal verfügbare Verdichterdruckverhältnis des Abgasturboladers VPATL ermittelt. Die Zeitkonstante bzw. die Zeitkonstanten des Filters 36 werden dabei aus einer Kennlinie 38 in Abhängigkeit der Motordrehzahl ausgelesen, wobei mit steigender Motordrehzahl kleinere Zeitkonstanten und somit eine geringere Filterwirkung erzeugt werden.

Anstelle eines Sollwertes für den Luftmassenstroms kann in anderen Ausführungen auch der gemessene Wert für den Luftmassenstrom zur Bildung des Druckverhältnisses über dem Abgasturbolader herangezogen werden. Ergebnis ist dann das tatsächlich erreichte, nicht wie oben das erreichbare Druckverhältnis. Anstelle der Luftmassenwerte sind auch die entsprechenden Saugrohrdruckwerte oder Füllungswerte (Zylinderfüllung) geeignet.

Wesentlich ist nun, dass das Gesamtladedruckverhältnis, d.h. das Produkt aus dem Verdichterdruckverhältnis des Abgasturboladers und dem des elektrischen Hilfsladers (EL) gleich dem Quotient aus einem Ladedruckwert zu einem Umgebungsdruckwert ist. Somit bestimmt sich das Verdichterdruckverhältnis des elektrischen Hilfsladers (EL) gemäß 40 nach Maßgabe des aus dieser Randbedingung abgeleiteten Zusammenhangs, nach dem das Verdichterdruckverhältnis VPEL des elektrischen Hilfsladers (EL) aus dem Quotienten des Solldrucks und dem Produkt aus Umgebungsdruck und Verdichterverhältnis des Abgasturboladers ermittelt wird. Anstelle des Umgebungsdrucks kann auch der Druck am Eintritt des ersten der beiden Lader in Strömungsrichtung verwendet werden.

Vorzugsweise wird der Umgebungsdruck durch eine Messeinrichtung 42 ermittelt, während als Ladedruckwert ein Sollladedruck verwendet wird, der gemäß 44 beispielsweise im Rahmen der eingangs genannten Lösung abhängig vom Fahrerwunsch bestimmt wird.

Das in 40 gebildete Verdichterdruckverhältnis des elektrischen Hilfsladers VPEL stellt also einen Sollwert für das Verdichterdruckverhältnis dar. Dieser wird einem weiteren Kennfeld 46 zugeführt, welches das Verdichterkennfeld des elektrischen Hilfsladers (EL) darstellt. In diesem, ebenfalls beispielsweise durch Prüfstandsmessungen ermittelten Kennfelds, wird abhängig vom Solldruckverhältnis des elektrischen Hilfsladers (EL) die Solldrehzahl NELSOLL des Hilfsladers ermittelt. Dies erfolgt abhängig von dem wie oben berechneten Sollverdichterdruckverhältnisses des elektrischen Hilfsladers (EL) und dem fahrerwunschabhängigen Luftmassensollstrom mlsoll. Abhängig von diesen Größen wird die Solldrehzahl ermittelt und einer Drehzahlregelung 48 zugeführt. Diese bildet dann auf der Basis der Solldrehzahl und einer Istdrehzahl (beispielsweise durch Messung des Stromes durch den Motor ermittelt) Ansteuersignale für den Motor 22, welcher dann mit der vorgegebenen Solldrehzahl dreht.

In einer besonders vorteilhaften Ergänzung ist die Solldrehzahl NELSOLL bzw. die Istdrehzahl des Motors 22 begrenzt, so dass eine vorgegebene Bordnetzspannung nicht unterschritten wird. Dies bedeutet, dass, wenn die gemessene Bordnetzspannung einen vorgegebenen Grenzwert unterschreitet, ein weiteres Ansteigen der Solldrehzahl oder der Istdrehzahl durch Begrenzen des entsprechenden Werts verhindert wird.

Als Überhitzungsschutz für den Motor des elektrischen Laders (EL) wird ergänzend die Einschaltdauer des elektrischen Laders auf einen Maximalwert begrenzt. Nach Ablauf dieser Maximalzeit wird bei Erreichen des Abschaltzeitpunktes der elektrische Hilfslader wieder abgeschaltet. Die Abschaltung erfolgt dabei in einem bevorzugtem Ausführungsbeispiel als rampenförmige Abregelung mit vorgegebener Steigung, d. h. es erfolgt eine Reduzierung der Solldrehzahl mit vorgegebener Steigung bis auf den Wert Null. Die oben erwähnte Maximalzeit ist dabei in einem Ausführungsbeispiel betriebsgrößenabhängig, insbesondere von der Aussentemperatur und/oder der Motortemperatur des elektrischen Hilfsladers und/oder der Ladebilanz der Batterie und/oder der Bordnetzspannung. Dabei ist der Maximalwert kleiner, je größer die Temperatur, je schlechter die Ladebilanz oder je niedriger die Bordnetzspannung ist.

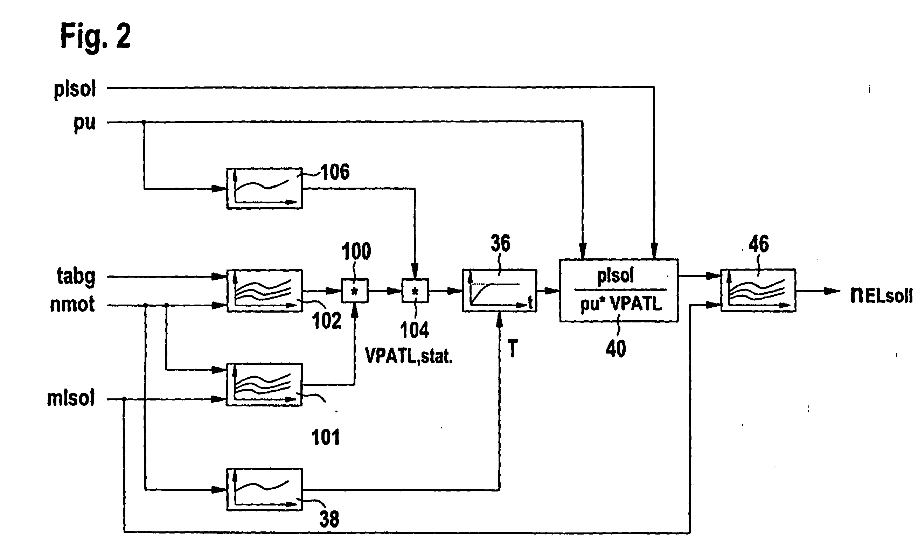

Ein weiteres Ausführungsbeispiel stellt das in Figur 2 dargestellte Ablaufdiagramm dar. Auch dieses Ablaufdiagramm beschreibt das Programm eines Mikrocomputers der Steuereinheit 28, wobei die einzelnen Blöcke Programme, Programmteile oder Programmschritte, die Verbindungslinien den Informationsfluss darstellen. Die bereits anhand Figur 1 erwähnten Elemente tragen in Figur 2 dieselben Bezugszeichen und weisen dieselbe Funktion auf.

Wesentlicher Unterschied zwischen den Vorgehensweisen der Figur 1 und der Figur 2 besteht darin, dass bei der Bestimmung des Verdichterdruckverhältnisses des Abgasturboladers bei der Ausführung der Figur 2 Größen in Abhängigkeit des Umgebungsdrucks Pu und der Abgastemperatur TABG eingesetzt werden. Zunächst bei der Vorgehensweise der Figur 2 wird der stationär erreichbare Wert des Verdichterdruckverhältnisses VPATLSTATT im Kennfeld 102 in Abhängigkeit der Abgastemperatur TABG, die beispielsweise mittels eines Sensors oder eines Berechnungsmodells erfasst wird, und der Motordrehzahl nmot gebildet. Auch das Kennfeld 102 wird beispielsweise durch Prüfstandsmessungen ermittelt. Der stationäre Wert wird dann in der Multiplikationsstelle 100 mit einem Korrekturwert korrigiert, welcher im Kennfeld 101 in Abhängigkeit der Motortemperatur und des Sollluftmassenstroms MLSOLL gebildet wird. Der Grund für diese Korrektur besteht in der Kopplung des Abgasturboladers und des elektrischen Hilfsladers, deren Wirkungen sich gegenseitig beeinflussen. Der korrigierte stationäre Wert des Verdichterverhältnisses des Abgasturboladers wird in einer weiteren Multiplikationsstufe 104 abhängig von einem weiteren Korrekturwert korrigiert. Letzterer wird durch die Kennlinie 106 in Abhängigkeit des Umgebungsdrucks pu gebildet. Auch die Kennlinie 106 wird im Rahmen der Applikation ermittelt. Der auf diese Weise korrigierte stationäre Verdichterdruckverhältniswert des Abgasturboladers wird wie anhand Figur 1 beschrieben durch das Filter 36 in einen aktuellen Wert und durch die Umrechnung im Schritt 40 in einen Sollwert für das Verdichterdruckverhältnis des elektrischen Hilfsladers (EL) umgerechnet. Letzteres wird dann über das Kennfeld 46 in die Solldrehzahl umgewandelt, die entsprechend der Darstellung anhand Figur 1 eingestellt wird.

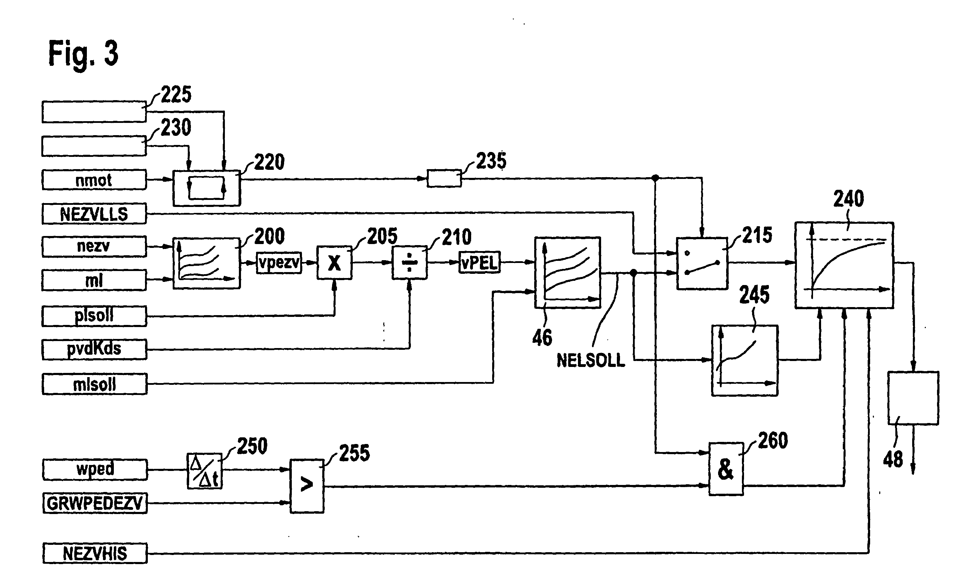

Ein weiteres Ausführungsbeispiel stellt das in Figur 3 dargestellte Ablaufdiagramm dar. Auch dieses Ablaufdiagramm beschreibt das Programm eines Mikrocomputers der Steuereinheit 28, wobei die einzelnen Blöcke Programme, Programmteile oder Programmschritte, die Verbindungslinien den Informationsfluss darstellen.

In Figur 3 kennzeichnet 200 ein Kennfeld zur Ermittlung eines aktuellen Verdichterdruckverhältnisses vpezv des elektrischen Laders oder elektrischen Hilfsladers 16 in Abhängigkeit einer Istdrehzahl nezv des elektrischen Laders 16 und eines Luftmassenistwertes ml bzw. eines Istwertes für die Luftströmung zur Brennkraftmaschine. In einem Multiplikationsglied 205 wird das aktuelle Verdichterdruckverhältnis vpezv mit dem Ladedrucksollwert plsoll multipliziert, der wie beschrieben abhängig von Last, Motordrehzahl und einer Vielzahl von weiteren Parametern, wie Temperatur, Höhe bzw. Umgebungsdruck pu, Klopfzustand, etc. ermittelt wird. Anschließend wird in einem Divisionsglied 210 das Produkt vpezv * plsoll durch einen Ladedruckistwert pvdkds dividiert. Der Ladedruckistwert pvdkds wird dabei in Strömungsrichtung nach dem elektrischen Lader 16 und dem Abgasturbolader 14 bzw. vor der Drosselklappe mittels eines Drucksensors gemessen, kann aber auch modelliert werden. Am Ausgang des Divisionsgliedes 210 ergibt sich dann der der Sollwert VPEL für das Verdichterdruckverhältnis des elektrischen Laders 16. Somit gilt:

$$VPEL = vpezv * plsoll/pvdkds \qquad (1)$$

Die Beziehung (1) läßt sich dabei aus der folgenden, zum Ausführungsbeispiel nach Figur 1 beschriebenen Beziehung herleiten:

$$VPEL = plsoll/(pu * VPATL) \qquad (2)$$

Wenn der Eingangsdruck des Abgasturboladers 14_in guter Näherung der Umgebungsdruck pu ist, dann ist der einzustellende Ausgangsdruck des Abgasturboladers das Produkt aus dem Umgebungsdruck pu und dem aktuell maximal verfügbaren Verdichterdruckverhältnis VPATL des Abgasturboladers 14, also pu * VPATL. Dies ist dann der aktuell maximal verfügbare Eingangsdruck am elektrischen Lader 16. Anstelle des Umgebungsdruckes pu kann auch ein modellierter oder gemessener Druck am Ausgang des Luftfilters 12 verwendet werden. Mit dem aktuellen Verdichterdruckverhältnis vpezv des elektrischen Laders 16 ergibt sich dann am Ausgang des elektrischen Laders 16 der Ladedruckistwert pvdkds als

$$pvdkds = pu * VPATL * vpezv \qquad (3).$$

Die Beziehung (3) aufgelöst nach VPATL und eingesetzt in die Beziehung (2) ergibt die Beziehung (1).

Daraus folgt, dass gemäß dem Ausführungsbesipiel nach Figur 3 zur bedarfsgerechten Ansteuerung des elektrischen Laders 16 eine Information über den Beitrag des Abgasturboladers 14 zur Verdichtung allein nicht notwendig ist, vorausgesetzt, das aktuelle Verdichterdruckverhältnis vpezv und der Ladedruckistwert pvdkds stehen in der beschriebenen Weise als Meßgrößen zur Verfügung.

Daraus resultieren gegenüber der Ausführungsform nach Figur 1 weniger Rechenaufwand, ein geringerer Applikationsaufwand, ein schnelleres Ansprechverhalten des elektrischen Laders 16 und ein verbesserter Fahrkomfort, da zur Ermittlung des einzustellenden Verdichterdruckverhältnisses des elektrischen Laders 16 wie beschrieben die Istdrehzahl nezv des elektrischen Laders 16 verwendet werden, die in der elektronischen Steuereinheit 28 durch Einlesen des entsprechenden Meßwertes bekannt ist, wobei die Drehzahlregelung 48 die Istdrehzahl nezv des elektrischen Laders 16 ohne Mehraufwand zur Verfügung stellt.

Das nach dem Divisionsglied 210 zur Verfügung stehende einzustellende Verdichterdruckverhältnis VPEL des elektrischen Laders 16 stellt also wie auch bei der Ausführungsform nach Figur 1 einen Sollwert für das Verdichterdruckverhältnis dar. Dieser wird wie zu Figur 1 beschrieben dem weiteren Kennfeld 46 zugeführt, welches das Verdichterkennfeld des elektrischen Hilfsladers 16 darstellt. In diesem, ebenfalls beispielsweise durch Prüfstandsmessungen ermittelten Kennfelds, wird abhängig vom Solldruckverhältnis des elektrischen Laders 16 die Solldrehzahl NELSOLL des elektrischen Laders 16 ermittelt. Dies erfolgt abhängig von dem wie oben berechneten einzustellenden Verdichterdruckverhältnis VPEL des elektrischen Laders 16 und dem fahrerwunschabhängigen Luftmassensollstrom mlsoll. Abhängig von diesen Größen wird als Solldrehzahlwert die Solldrehzahl NELSOLL ermittelt und der Drehzahlregelung 48 zugeführt. Diese bildet dann auf der Basis der Solldrehzahl NELSOLL und einer Istdrehzahl, die beispielsweise durch Messung des Stromes durch den Motor 22 des elektrischen Laders 16 ermittelt werden kann, Ansteuersignale für den Motor 22 des elektrischen Laders 16, welcher dann mit der vorgegebenen Solldrehzahl NELSOLL dreht.

Das Kennfeld 200 zur Ermittlung des aktuellen Verdichterdruckverhältnisses vpezv des elektrischen Laders 16 ist gegenüber dem Verdichterkennfeld 46 invers im Hinblick auf die Eingangs- und Ausgangsgrößen Drehzahl des Motors 22 des elektrischen Laders 16 und Verdichterdruckverhältnis des elektrischen Laders 16.

Optional kann allgemein, also auch für jedes der drei oben beschriebenen Ausführungsbeispiele wie in Figur 3 dargestellt ein Schalter 215 vorgesehen sein, über den je nach Schalterstellung als Solldrehzahlwert entweder die Solldrehzahl NELSOLL oder eine Ruhedrehzahl NEZVLLS zur weiterleitung an die Drehzahlregelung 48 ausgewählt wird.

Die Ruhedrehzahl NEZVLLS kann auch erst bei getretener Kupplung aktiviert werden.

Um die Bordnetzbelastung des Fahrzeugs gering zu halten und den elektrischen Lader 16 nur bedarfsgerecht hinzuzuschalten, kann es vorgesehen sein, den elektrischen Lader 16 abzuschalten, wenn die Motordrehzahl nmot der Brennkraftmaschine, die bspw. als Verbrennungsmotor ausgebildet sein kann, oberhalb einer ersten vorgegebenen Motordrehzahl 225 liegt.

Zusätzlich und um ein ständiges Aus- und Einschalten des elektrischen Laders 16 zu verhindern, kann es vorgesehen sein, dass der elektrische Lader 16 nach dem Abschalten wieder eingeschaltet wird, wenn die Motordrehzahl nmot der Brennkraftmaschine eine zweite vorgegebene Motordrehzahl 230 unterschreitet, die kleiner als die erste vorgegebene Motordrehzahl 225 ist. Auf diese Weise kann eine Hysteresefunktion realisiert werden, wie sie in Figur 3 mit dem Bezugzeichen 220 gekennzeichnet ist.

Für den Fall des Überschreitens der ersten vorgegebenen Motordrehzahl 225 durch die Motordrehzahl nmot der Brennkraftmaschine wird ein Bit 235 gesetzt. Bei Unterschreiten der zweiten vorgegebenen Motordrehzahl 230 durch die Motordrehzahl nmot der Brennkraftmaschine wird das Bit 235 zurückgesetzt. Ist das Bit 235 gesetzt, so wird der elektrische Lader 16 nicht benötigt und abgeschaltet. Der Schalter 215 wird dann in eine Schalterstellung gebracht, in der er die Ruhedrehzahl NEZVLLS als Solldrehzahlwert für den elektrischen Lader 16 der Drehzahlregelung 48 zuführt. Ist das Bit 235 zurückgesetzt, so wird der elektrische Lader 16 benötigt und zugeschaltet. Der Schalter 215 wird dann in eine Schalterstellung gebracht, in der er die Solldrehzahl NELSOLL als Solldrehzahlwert der Drehzahlregelung 48 zuführt.

Optional kann es weiterhin generell und damit auch für jedes der drei beschriebenen Ausführungsbeispiele vorgesehen sein, dass der Solldrehzahlwert des elektrischen Laders 16 mittels eines zweiten Filters 240, das beispielsweise als Tiefpassfilter ausgebildet sein soll, gefiltert wird. Dies ist unabhängig von der Verwendung des Schalters 215. In Figur 3 wird beispielhaft dargestellt, dass dem Schalter 215 der Tiefpass 240 folgt, dem Tiefpass 240 somit als Solldrehzahlwert entweder die Ruhedrehzahl NEZVLLS oder die Solldrehzahl NELSOLL zugeführt wird.

Durch den Tiefpass 240 wird die Drehzahlregelung 48 gegen Schwingungen abgesichert. Die Zeitkonstante oder die Zeitkonstanten des Tiefpasses 240 können dabei in Abhängigkeit der Solldrehzahl NELSOLL gewählt werden, für den Fall, dass die Solldrehzahl NELSOLL der Drehzahlregelung 48 zugeführt werden soll. Im folgenden soll beispielhaft von einer einzigen Zeitkonstanten des Tiefpasses 240 ausgegangen werden. Die Zeitkonstante kann mittels einer Kennlinie 245 in Abhängigkeit der Solldrehzahl NELSOLL gewählt werden. Dabei kann der Kennlinienverlauf beispielsweise derart vorgegeben sein, dass einer kleineren Solldrehzahl NELSOLL eine kleinere Zeitkonstante und einer größeren Solldrehzahl NELSOLL eine größere Zeitkonstante zugeordnet ist. Dies führt dazu, dass eine kleinere Solldrehzahl NELSOLL schneller und eine größere Solldrehzahl NELSOLL langsamer von der nach dem Tiefpass 240 folgenden Drehzahlregelung 48 eingestellt werden kann. Dies führt bei größeren Solldrehzahlen NELSOLL nicht zu einem abrupten Hochfahren des elektrischen Laders und damit zu einem größeren Fahrkomfort.

Alternativ oder zusätzlich könnten die Zeitkonstante oder die Zeitkonstanten des Tiefpasses 240 auch parameterabhängig bzw. kennfeldgesteuert beispielsweise in Abhängigkeit des Luftmassenistwertes ml und/oder der Motordrehzahl nezv des elektrischen Laders 16 eingestellt werden.

Optional kann es weiterhin generell und damit auch für jedes der drei beschriebenen Ausführungsbeispiele vorgesehen sein, dass eine Vorrichtung 250 zur Gradientenbildung einer Fahrpedalstellung wped über der Zeit t vorgesehen ist. Der durch die Vorrichtung 250 gebildete Gradient wird einem Vergleicher 255 zugeführt. Der Vergleicher 255 vergleicht den Gradienten mit einem vorgegebenen Wert GRWPEDEZV. Liegt der Gradient über dem vorgegebenen Wert GRWPEDEZV, dann wird als Solldrehzahlwert eine Maximaldrehzahl NEZVHIS für den elektrischen Lader 16 eingestellt und entweder direkt oder wie in Figur 3 über den Tiefpass 240 der Drehzahlregelung 48 zugeführt.

Zusätzlich und wie in Figur 3 dargestellt kann es vorgesehen sein, die vom Gradienten der Fahrpedalstellung abhängige Solldrehzahlwertbildung mit der oben beschriebenen Hysteresefunktion zu verknüpfen. Dabei wird einerseits der Ausgang des Vergleichers 255 und andererseits das Bit 235 auf ein UND-Gatter 260 geführt. Der Ausgang des Vergleichers 255 ist dabei gesetzt, wenn der Gradient der Fahrpedalstellung über dem vorgegebenen Wert GRWPEDEZV liegt.

Wenn nun also der Gradient der Fahrpedalstellung über dem vorgegebenen Wert GRWPEDEZV liegt und die Motordrehzahl nmot der Brennkraftmaschine unter der ersten vorgegebenen Motordrehzahl liegt, dann wird dem Tiefpass 240 die Maximaldrehzahl NEZVHIS als Solldrehzahlwert zugeführt. Auf diese Weise läßt sich bei einer sehr schnellen Momentenanforderung und ausgeschaltetem oder mit schwacher Drehzahl betriebenem elektrischem Lader 16 der elektrische Lader 16 in einem schnelleren Rechenraster vorgesteuert zum Hochlauf bringen, wodurch ein erheblicher Dynamikgewinn erzielt wird.

Die Berechnung des Ladedrucksollwertes plsoll erfolgt dabei über die Momentenstruktur der Motorsteuerung und benötigt eine dementsprechende Laufzeit. Weiterhin enthält der Berechnungsweg Funktionen wie z.B. die Lastschlagdämpfung, die zu einem verzögerten Aufbau des Ladedrucksollwertes plsoll führen, der deshalb gegenüber dem aus der Betätigung des Fahrpedals resultierenden Pedalsignal in Form des Gradienten der Fahrpedalstellung nacheilt.

Alternativ oder auch ergänzend könnten auch der Ladedruck-Sollwert plsoll und der Luftmassensollstrom mlsoll über eine Prädiktionsrechnung ermittelt werden. Durch eine solche Vorhersage lässt sich der Drehzahlaufbau des elektrischen Laders 16 ebenfalls vorsteuern bzw. schneller realisieren. Bei der Prädiktionsrechnung kann beispielsweise die Differenz zwischen dem letzten und dem vorletzten Ladedruck-Sollwert bzw. Luftmassen-Sollstrom bestimmt und aufgrund dieser Differenz eine Extrapolation auf einen nachfolgenden Ladedruck-Sollwert bzw. Luftmassen-Sollstrom durchgeführt und somit eine Vorhersage realisiert werden.

Die anhand der obigen Ausführungsbeispiele beschriebene Erfindung gewährleistet eine präzise und zugleich bedarfsabhängige Steuerung oder Regelung des elektrischen Laders 16 ohne unnötige Bordnetzbelastung und ohne Mehraufwand hinsichtlich der erforderlichen Sensorik.

Wenn der Druck pvor vor dem elektrischen Lader 16 und der Druck pnach hinter dem elektrischen Lader 16 in Strömungsrichtung bekannt ist, beispielsweise durch Messung mittels je eines Drucksensors vor und nach dem elektrischen Lader 16, so kann durch Quotientenbildung pnach/pvor das aktuelle Verdichterdruckverhältnis vpezv = pnach/pvor des elektrischen Laders 16 ermittelt werden. In diesem Fall kann ausgehend vom Ausführungsbeispiel nach Figur 3 auf das Kennfeld 200 zur Ermittlung des aktuellen Verdichterdruckverhältnisses vpezv des elektrischen Laders 16 verzichtet werden.

Gemäß Figur 1 ist der elektrische Lader 16 dem Abgasturbolader 14 nachgeschaltet. Die Reihenfolge der beiden Lader 14, 16 ist jedoch beliebig im Hinblick auf die erfindungsgemäße Regelung des Verdichterdruckverhältnisses des elektrischen Laders 16. Wenn jedoch entgegen der Darstellung nach Figur 1 der elektrische Lader 16 in Strömungsrichtung vor dem Abgasturbolader 14 angeordnet ist, so ist dies aus thermodynamischer Sicht für den elektrischen Lader 16 günstiger.

**Patentansprüche**

1. Verfahren zur Steuerung eines elektrisch betriebenen Laders, welcher mit einem Abgasturbolader zur Verdichtung der angesaugten Luft einer Brennkraftmaschine zusammenwirkt, wobei ein Ansteuersignal gebildet wird, welches den elektrischen Lader ansteuert, **dadurch gekennzeichnet, dass** das Ansteuersignal in Abhängigkeit eines einzustellenden Verdichterdruckverhältnisses über dem elektrischen Lader gebildet wird.

2. Verfahren nach Anspruch 2, **dadurch gekennzeichnet, dass** das einzustellende Verdichterdruckverhältnis des elektrischen Laders in Abhängigkeit des Verdichterdruckverhälmisses des Abgasturboladers bestimmt wird.

3. Verfahren nach Anspruch 2, **dadurch gekennzeichnet, dass** das Verdichterverhältnis des Abgasturboladers nach Maßgabe von Motordrehzahl und einem vorgegebenen Wert für die Luftströmung zur Brennkraftmaschine gebildet wird.

4. Verfahren nach einem der Ansprüche 2 oder 3, **dadurch gekennzeichnet, dass** das Druckverhältnis des Abgasturboladers mittels eines Filters gefiltert wird.

5. Verfahren nach Anspruch 4, **dadurch gekennzeichnet, dass** die Zeitkonstante bzw. die Zeitkonstanten des Filters betriebsgrößenabhängig, vorzugsweise motordrehzahlabhängig sind.

6. Verfahren nach einem der vorhergehenden Ansprüche, **dadurch gekennzeichnet, dass** das einzustellende Verdichterdruckverhältnis des elektrischen Laders auf der Basis des Verdichterdruckverhältnisses des Abgasturboladers, des Umgebungsdrucks oder des Drucks am Eintritt des ersten der beiden Lader in Strömungsrichtung und eines Ladedrucksollwertes ermittelt wird.

7. Verfahren nach einem der vorhergehenden Ansprüche, **dadurch gekennzeichnet, dass** bei der Bestimmung des Verdichterdruckverhältnis des Abgasturboladers der Umgebungsdruck, der Druck am Eintritt eines der beiden Lader in Strömungsrichtung und/oder eine Abgastemperatur berücksichtigt werden.

8. Verfahren nach einem der vorhergehenden Ansprüche, **dadurch gekennzeichnet, dass** der Druck vor dem elektrischen Lader gemessen oder modelliert wird, daraus das Verdichterdruckverhältnis des elektrischen Laders bestimmt wird und der elektrische Lader abhängig vom einzustellenden Verdichterdruckverhältnis und dem bestimmten Verdichterdruckverhältnis angesteuert wird.

9. Verfahren nach Anspruch 1, **dadurch gekennzeichnet, dass** das einzustellende Verdichterdruckverhältnis des elektrischen Laders in Abhängigkeit eines aktuellen Verdichterdruckverhältnisses des elektrischen Laders bestimmt wird.

10. Verfahren nach Anspruch 9, **dadurch gekennzeichnet, dass** das einzustellende Verdichterdruckverhältnis des elektrischen Laders in Abhängigkeit des Verhältnisses zwischen einem Ladedrucksollwert und einem Ladedrukkistwert bestimmt wird.

11. Verfahren nach Anspruch 9 oder 10, **dadurch gekennzeichnet, dass** ein aktuelles Verdichterdruckverhältnis des elektrischen Laders in Abhängigkeit einer Istdrehzahl des elektrischen Laders und einem Istwert für die Luftströmung zur Brennkraftmaschine gebildet wird.

12. Verfahren nach einem der vorherigen Ansprüche, **dadurch gekennzeichnet, dass** der elektrische Lader oberhalb einer ersten vorgegebenen Motordrehzahl abgeschaltet wird.

13. Verfahren nach Anspruch 12, **dadurch gekennzeichnet, dass** der elektrische Lader nach dem Abschalten wieder eingeschaltet wird, wenn eine zweite vorgegebene Motordrehzahl unterschritten wird, die kleiner als die erste vorgegebene Motordrehzahl ist.

14. Verfahren nach einem der vorherigen Ansprüche, **dadurch gekennzeichnet, dass** das einzustellende Verdichterdruckverhältnis des elektrischen Laders in Abhängigkeit eines Fahrpedalgradienten bestimmt wird.

15. Verfahren nach Anspruch 14, **dadurch gekennzeichnet, dass** bei Überschreiten eines vorgegebenen Wertes durch den Fahrpedalgradienten eine Maximaldrehzahl als Solldrehzahlwert für den elektrischen Lader eingestellt wird.

16. Verfahren nach einem der vorhergehenden Ansprüche, **dadurch gekennzeichnet, dass** abhängig vom einzustellenden Verdichterdruckverhältnisses und einer vorgegebenen Wertes für die Luftströmung ein Solldrehzahlwert für den elektrischen Lader gebildet wird, welcher mittels einer Drehzahlregelung oder Drehzahlsteuerung eingestellt wird.

17. Verfahren nach einem der vorherigen Ansprüche, **dadurch gekennzeichnet, dass** der elektrische Lader in einem abgeschalteten Zustand mit einer Ruhedrehzahl als Solldrehzahlwert eingestellt wird.

18. Verfahren nach einem der Ansprüche 15, 16 oder 17, **dadurch gekennzeichnet, dass** der Solldrehzahlwert des elektrischen Laders mittels eines zweiten Filters, insbesondere eines Tiefpasses, gefiltert wird.

19. Verfahren nach Anspruch 18, **dadurch gekennzeichnet, dass** eine Zeitkonstante bzw. Zeitkonstanten des zweiten Filters in Abhängigkeit des Solldrehzahlwertes des elektrischen Laders gewählt werden.

20. Vorrichtung zur Steuerung eines elektrisch betriebenen Laders, welcher mit einem Abgasturbolader zum Verdichten der einer Brennkraftmaschine zugeführten Luft zusammenwirkt, mit einer Steuereinheit, welche ein Ansteuersignal zur Ansteuerung des elektrischen Laders erzeugt, **dadurch gekennzeichnet, dass** die Steuereinheit Ansteuersignalbildungsmittel umfasst, welche das Ansteuersignal abhängig von einem einzustellenden Verdichterdruckverhältnis des elektrischen Laders bilden.

21. Computerprogramm mit Programmcodemitteln, um alle Schritte von jedem beliebigen der Ansprüche 1 bis 19 durchzuführen, wenn das Programm von einer Vorrichtung nach Anspruch 20 ausgeführt wird.

22. Computerprogramm nach Anspruch 21, **dadurch gekennzeichnet, dass** es auf einem computerlesbaren Datenträger gespeichert ist.

**Claims**

1. Method for controlling an electrically driven charger which interacts with an exhaust gas turbocharger for compressing the sucked-in air of an internal combustion engine, wherein an actuation signal is formed which actuates the electric charger, **characterized in that** the actuation signal is formed by means of the electric charger as a function of a compressor pressure ratio to be set.

2. Method according to Claim 2, **characterized in that** the compressor pressure ratio of the electric charger to be set is determined as a function of the compressor pressure ratio of the exhaust gas turbocharger.

3. Method according to Claim 2, **characterized in that** the compressor ratio of the exhaust gas turbocharger is formed in accordance with the engine speed and a predefined value for the air flow to the internal combustion engine.

4. Method according to one of Claims 2 or 3, **characterized in that** the pressure ratio of the exhaust gas turbocharger is filtered by means of a filter.

5. Method according to Claim 4, **characterized in that** the time constant or time constants of the filter are dependent on the operating variables, preferably on the engine speed.

6. Method according to one of the preceding claims, **characterized in that** the compressor pressure ratio to be set for the electric charger is determined on the basis of the compressor pressure ratio of the exhaust gas turbocharger, of the ambient pressure or of the pressure at the inlet of the first of the two chargers in the direction of flow and of a charge pressure setpoint value.

7. Method according to one of the preceding claims, **characterized in that** the ambient pressure, the pressure at the inlet to one of the two chargers in the direction of flow and/or an exhaust gas temperature are taken into account in the determination of the compressor pressure ratio of the exhaust gas turbocharger.

8. Method according to one of the preceding claims, **characterized in that** the pressure upstream of the electric charger is measured or modelled, the compressor pressure ratio of the electric charger is determined therefrom and the electric charger is actuated as a function of the compressor pressure ratio to be set and the specific compressor pressure ratio.

9. Method according to Claim 1, **characterized in that** the compressor pressure ratio to be set for the electric charger is determined as a function of a current compressor pressure ratio of the electric charger.

10. Method according to Claim 9, **characterized in that** the compressor pressure ratio to be set for the electric charger is determined as a function of the ratio between a charge pressure setpoint value and a charge pressure actual value.

11. Method according to Claim 9 or 10, **characterized in that** a current compressor pressure ratio of the electric charger is formed as a function of an actual speed of the electric charger and an actual value for the air flow to the internal combustion engine.

12. Method according to one of the preceding claims, **characterized in that** the electric charger is switched off above a first predefined engine speed.

13. Method according to Claim 12, **characterized in that** the electric charger is switched on again after being switched off if the engine speed drops below a second predefined engine speed which is lower than the first predefined engine speed.

14. Method according to one of the preceding claims, **characterized in that** the compressor pressure ratio of the electric charger to be set is determined as a function of an accelerator pedal gradient.

15. Method according to Claim 14, **characterized in that** when a predefined pressure is exceeded by the accelerator pedal gradient a maximum speed is set as a setpoint rotational speed for the electric charger.

16. Method according to one of the preceding claims, **characterized in that** a setpoint rotational value for the electric charger, which is set by means of a rotational speed closed-loop or open-loop control process, is formed as a function of the compressor pressure ratio to be set and a predefined value for the airflow.

17. Method according to one of the preceding claims, **characterized in that** the electric charger is set in a switched-off state with a quiescent rotational speed as the setpoint rotational speed value.

**18.** Method according to one of Claims 15, 16 or 17, **characterized in that** the setpoint rotational speed value of the electric charger is filtered by means of a second filter, in particular a low-pass filter.

**19.** Method according to Claim 18, **characterized in that** a time constant or time constants of the second filter is/are selected as a function of the setpoint rotational speed value of the electric charger.

**20.** Device for controlling an electrically operated charger which interacts with an exhaust gas turbocharger to compress the air supplied to an internal combustion engine, having a control unit which generates an actuation signal for actuating the electric charger, **characterized in that** the control unit comprises actuation signal-forming means which form the actuation signal as a function of a compressor pressure ratio to be set for the electric charger.

**21.** Computer program having program code means for carrying out all the steps by any of Claims 1 to 19 if the program is carried out by a device according to Claim 20.

**22.** Computer program according to Claim 21, **characterized in that** it is stored on a computer-readable data carrier.


**Revendications**

**1.** Procédé pour commander un compresseur actionné à l'électricité, en interaction avec un turbocompresseur d'échappement pour comprimer l'air aspiré d'un moteur à combustion interne, selon lequel on forme un signal de commande du compresseur électrique,
**caractérisé en ce que**
le signal de commande est formé en fonction d'un rapport de compression de compresseur à régler sur le compresseur électrique.

**2.** Procédé selon la revendication 1,
**caractérisé en ce que**
le rapport de compression à régler sur le compresseur électrique est déterminé en fonction du rapport de compression du turbocompresseur d'échappement.

**3.** Procédé selon la revendication 2,
**caractérisé en ce que**
le rapport de compression du turbocompresseur d'échappement est formé en fonction de la vitesse de rotation du moteur et d'une valeur prédéfinie pour le courant d'air vers le moteur à combustion interne.

**4.** Procédé selon l'une des revendications 2 ou 3,
**caractérisé en ce que**
le rapport de compression du turbocompresseur d'échappement est filtré à l'aide d'un filtre.

**5.** Procédé selon la revendication 4,
**caractérisé en ce que**
la ou les constantes de temps du filtre dépendent de grandeurs de fonctionnement, de préférence de la vitesse de rotation du moteur.

**6.** Procédé selon l'une des revendications précédentes,
**caractérisé en ce que**
le rapport de compression à régler du compresseur électrique est déterminé à partir du rapport de compression du turbocompresseur d'échappement, de la pression de l'environnement ou de la pression à l'entrée du premier des deux compresseurs dans le sens d'écoulement et d'une valeur de pression exigée du compresseur.

**7.** Procédé selon l'une des revendications précédentes,
**caractérisé en ce que**
quand on détermine le rapport de compression du turbocompresseur d'échappement, on prend en compte la pression de l'environnement, la pression à l'entrée du premier des deux compresseurs dans le sens d'écoulement et/ou une température du gaz d'échappement.

**8.** Procédé selon l'une des revendications précédentes,

**caractérisé en ce que**
la pression en amont du compresseur électrique est mesurée ou modélisée, le rapport de compression du compresseur électrique est déterminé à partir d'elle et le compresseur électrique est commandé en fonction du rapport de compression de compresseur à régler et du rapport de compression de compresseur qu'on a déterminé.

9. Procédé selon la revendication 1,
**caractérisé en ce que**
le rapport de compression à régler du compresseur électrique est déterminé en fonction d'un rapport de compression momentané du compresseur électrique.

10. Procédé selon la revendication 9,
**caractérisé en ce que**
le rapport de compression à régler du compresseur électrique est déterminé en fonction du rapport entre une valeur exigée de la pression d'admission et une valeur réelle de la pression d'admission.

11. Procédé selon la revendication 9 ou 10,
**caractérisé en ce qu'**
un rapport de compression momentané du compresseur électrique est déterminé en fonction d'une vitesse de rotation réelle du compresseur électrique et d'une valeur réelle de débit d'air vers le moteur à combustion interne.

12. Procédé selon l'une des revendications précédentes,
**caractérisé en ce que**
le compresseur électrique est arrêté au-dessus d'une première vitesse de rotation prédéfinie du moteur.

13. Procédé selon la revendication 12,
**caractérisé en ce qu'**
après l'arrêt le compresseur électrique est remis en marche quand on passe au-dessous d'une deuxième vitesse de rotation prédéfinie de moteur qui est inférieure à la première vitesse de rotation prédéfinie de moteur.

14. Procédé selon l'une des revendications précédentes,
**caractérisé en ce que**
le rapport de compression à régler du compresseur électrique est déterminé en fonction d'un gradient de l'accélérateur.

15. Procédé selon la revendication 14,
**caractérisé en ce qu'**
une vitesse de rotation maximale est prise comme valeur exigée de vitesse de rotation pour le compresseur électrique lorsqu'une valeur prédéfinie est dépassée par le gradient de l'accélérateur.

16. Procédé selon l'une des revendications précédentes,
**caractérisé en ce qu'**
une valeur exigée de vitesse de rotation, destinée au compresseur électrique et réglée en réglant la vitesse de rotation ou en commandant la vitesse de rotation, est formée en fonction du rapport de compression de compresseur à régler et d'une valeur prédéfinie de débit d'air.

17. Procédé selon l'une des revendications précédentes,
**caractérisé en ce que**
lorsqu'il est à l'arrêt le compresseur électrique est réglé à une vitesse de rotation de repos qui sert de valeur exigée de vitesse de rotation.

18. Procédé selon l'une des revendications 15, 16 ou 17,
**caractérisé en ce que**
la valeur exigée de vitesse de rotation pour le compresseur électrique est filtrée à l'aide d'un deuxième filtre, en particulier d'un filtre passe-bas.

19. Procédé selon la revendication 18,
**caractérisé en ce qu'**
une ou des constantes de temps du deuxième filtre sont choisies en fonction de la valeur exigée de vitesse de rotation pour le compresseur électrique.

**20.** Dispositif pour commander un compresseur actionné à l'électricité, en interaction avec un turbocompresseur d'échappement pour comprimer l'air acheminé à un moteur à combustion interne, comportant une unité de commande qui produit un signal de commande du compresseur électrique,
**caractérisé en ce que**
l'unité de commande comprend des moyens qui forment le signal de commande en fonction d'un rapport de compression à régler sur le compresseur électrique.

**21.** Programme informatique comportant des moyens pour coder un programme d'exécution des étapes de l'une des revendications 1 à 19, par un dispositif selon la revendication 20.

**22.** Programme informatique selon la revendication 21,
**caractérisé en ce qu'**
il est mémorisé sur un support d'enregistrement lisible par ordinateur.

# Fig. 1

42

pu

44
plsol

34
mlsol

nmot

32

30    36

VP$_{ATL,stat.}$

38

28

40

VP$_{EL}$=plsol /(pu * VP$_{ATL}$)

T    VP$_{ATL}$    VP$_{EL}$

46

48

n$_{EL soll}$

24    26

M

22

20

10

12

14

16

18

# Fig. 2

EP 1 440 231 B1

# Fig. 3

nmot
NEZVLLS
nezv
ml
plsoll
pvdKds
mlsoll
wped
GRWPEDEZV
NEZVHIS

225
230
220
200
205
210
vpezv
vPEL
235
215
245
240
48
260
255
250
NELSOLL
46

&